# FASCICULE DE BREVET EUROPEEN

(11) **EP 0 681 538 B1**
(45) Date de publication et mention de la délivrance du brevet: **12.06.1996**
(21) Numéro de dépôt: 94904212.1
(22) Date de dépôt: 07.01.1994
(51) Int. Cl.: B60T 13/569

(54) **SERVOMOTEUR PNEUMATIQUE**
PNEUMATISCHER SERVOMOTOR
PNEUMATIC SERVO DEVICE

(30) Priorité: 02.02.1993 FR 9301055
(43) Date de publication de la demande: 15.11.1995
(73) Titulaire: ALLIEDSIGNAL EUROPE SERVICES TECHNIQUES, F-93700 Drancy (FR)
(72) Inventeur: GAUTIER, Jean Pierre, F-93600 Aulnay-sous-Bois (FR)
(86) Numéro de dépôt international: FR9400023
(87) Numéro de publication internationale: WO9418042

(56) Documents cités:
- EP-A- 0 416 966
- FR-A- 2 456 017
- FR-A- 2 482 214

## Description

La présente invention concerne les servomoteurs pneumatiques du type à dépression comprenant un boîtier formé d'un cylindre et d'un couvercle et divisé en deux chambres par une structure de paroi mobile, constituée d'un plateau et d'une membrane souple fixée par un bourrelet formé sur son bord périphérique extérieur au boîtier et formant un pli dans l'espace situé entre le plateau et le boîtier, le plateau étant solidarisé centralement à une structure de moyeu abritant un moyen de valve, le plateau comportant à son bord extérieur un prolongement vers l'avant formé avec un épaulement radial (EP-A-416 966).

Un tel servomoteur trouve son application notamment pour l'assistance au freinage des véhicules automobiles. Dans cette application, le fonctionnement d'un tel servomoteur est bien connu et peut donc être sommairement expliqué de la sorte : en phase de repos, les deux chambres sont connectées à une source de dépression ; en phase de freinage, de l'air à pression atmosphérique est admis dans l'une des chambres ; la différence des pressions entre les deux chambres entraîne alors le déplacement de la paroi mobile et par suite assiste le freinage.

Le document FR-B-2 334 862 décrit un servomoteur pneumatique dans lequel une membrane est supportée par un plateau rigide comportant à son bord extérieur un prolongement cylindrique vers l'avant pour éviter que la membrane, sous l'effet de la différence des pressions, ne se déforme vers le centre du servomoteur et ne vienne gêner le mouvement du plateau. Avec une telle conception, le diamètre du plateau reste limité par le diamètre de la partie arrière du boîtier. Il s'ensuit que la surface active de la paroi mobile, c'est-à-dire celle sur laquelle s'exerce la différence des pressions, est-elle aussi limitée par la partie arrière du boîtier.

La présente invention a pour objet d'obvier à cet inconvénient et de proposer un servomoteur dans lequel la surface active de la paroi mobile soit la plus grande possible.

Pour atteindre ce but, selon une caractéristique de l'invention, la distance radiale entre la partie arrière du prolongement et le couvercle est sensiblement égale à la distance radiale entre la partie avant du prolongement et le cylindre.

L'invention sera mieux comprise et d'autres buts, caractéristiques et avantages ressortiront plus clairement de la description qui suit d'un exemple de réalisation donné à titre non limitatif en référence aux dessins annexés sur lesquels :
- La Figure 1 est une vue en demi-coupe partielle d'un servomoteur pneumatique d'assistance de l'art antérieur ;
- La Figure 2 est une vue en demi-coupe partielle d'un servomoteur réalisé conformément à la présente invention ; et
- La Figure 3 est une vue agrandie de la partie III du servomoteur de la Figure 2.

Par convention, on appelle "avant" du servomoteur les parties tournées vers le maître-cylindre et "arrière" les parties tournées vers la pédale de frein. Ainsi, sur les Figures, l'avant est à gauche et l'arrière est à droite.

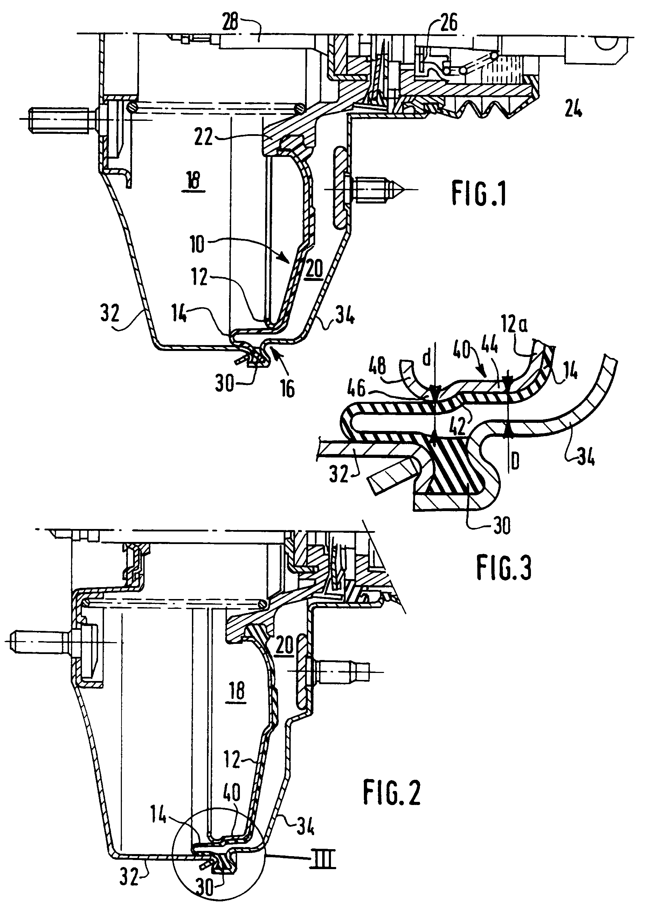

Sur la Figure 1, on a représenté en demi-coupe un servomoteur pneumatique d'assistance au freinage dont les éléments constitutifs principaux et le fonctionnement sont supposés connus de l'homme du métier : une structure de paroi mobile 10 formée d'un ensemble d'un plateau 12 métallique sensiblement disposé dans un plan radial et d'une membrane 14 souple sépare un boîtier 16 en deux chambres 18, 20 à l'intérieur desquelles des pressions différentes sont établies lors d'une action de freinage afin de provoquer le déplacement vers l'avant de la paroi mobile 10 et de ce fait créer l'assistance au freinage.

De façon connue, le plateau 12 est solidaire d'un moyeu 22, généralement en matériau plastique, qui est associé à un organe de commande 24. Cet organe de commande 24 détermine en outre l'état d'un moyen de valve de distribution 26 permettant d'obtenir des pressions différentes dans les chambres 18 et 20. Le moyeu est également solidaire d'une tige de poussée 28 dont l'extrémité s'appuie sur le piston d'entrée d'un maître-cylindre (non représenté).

La membrane 14 souple est fixée par son bord périphérique intérieur au plateau métallique 12 et par son bord périphérique extérieur au boîtier 16, et présente un pli lui permettant de se dérouler lors du mouvement du plateau 12.

De façon plus précise, le bord périphérique extérieur de la membrane 14 forme un bourrelet 30, maintenu prisonnier entre un cylindre 32 disposé à l'avant et un couvercle 34 disposé à l'arrière et serti sur le cylindre 32. Classiquement, pour faciliter cette opération de sertissage, et assurer le maintien et l'étanchéité du bourrelet 30, le diamètre du cylindre 32 est supérieur au diamètre du couvercle 34.

Ainsi qu'on l'a expliqué plus haut, et ainsi qu'on le voit sur la Figure 1, le diamètre de la paroi mobile 10, et en particulier du plateau 12, est limité par le diamètre du couvercle 16 lorsque le servomoteur est en position de repos, toutes les pièces occupant leur position arrière, tel que représenté à la Figure 1.

Cependant, lorsque la paroi mobile 10 est déplacée vers l'avant lors d'une action de freinage, la distance radiale entre le bord extérieur du plateau 12 et le boîtier 16 s'accroît de la différence entre les diamètres du cylindre 32 et du couvercle 34 lorsque le bord extérieur du plateau 12 passe au delà du bourrelet 30. Il s'ensuit donc que, dans cette position, le plateau 12 n'a pas un diamètre optimal, et donc que le servomoteur n'a pas des performances optimales.

Pour remédier à cet inconvénient, selon l'invention, le plateau 12 est formé à son bord extérieur 12a avec un prolongement vers l'avant 40, ce prolongement 40 comportant un épaulement radial 42. L'épaulement 42 sépare le prolongement 40 en une partie arrière 44 de plus petit diamètre et une partie avant 46 de plus grand diamètre.

Le diamètre de la partie avant 46 du prolongement 40 est choisi pour que la distance radiale d entre cette partie avant 46 et le cylindre 32, diminuée de l'épaisseur de la membrane 14, soit sensiblement égale à la distance radiale D entre la partie arrière 44 ou le bord extérieur 12a et le couvercle 34. Une telle disposition permet à la membrane 14 de se dérouler correctement lors des mouvements de la paroi mobile 10.

De plus, de façon avantageuse, la distance entre l'épaulement 42 et le bord extérieur 12a du plateau, ou encore la longueur axiale de la partie arrière 44 du prolongement 40, est choisie pour que, dans la position de repos du servomoteur, la partie avant 46 soit légèrement en avant de la partie la plus en avant du couvercle 34 dans la chambre arrière 20, c'est-à-dire au moins au niveau, dans un plan radial, du bourrelet 30. La partie avant 46 se termine vers l'avant par une partie 48 arrondie vers l'intérieur, pour ne pas endommager la membrane, comme cela est déjà connu. La partie avant 46 a de préférence une longueur axiale limitée, afin de ne pas réduire sensiblement la course utile de la paroi mobile 10.

En fait, étant donné que la partie avant 46 n'intervient pour définir la surface active de la paroi mobile 10 que par son diamètre maximum, il est possible, et même avantageux lors d'une fabrication en série, de réaliser la partie avant 46 de forme arrondie, de même rayon de courbure que la partie arrondie 48, et se raccordant à l'épaulement 42, qui pourra alors être incliné sur l'axe du servomoteur, comme on l'a représenté sur les Figures 2 et 3.

On voit donc bien qu'on a réalisé, conformément à l'invention, un servomoteur dans lequel la surface active de la paroi mobile est limitée par le diamètre de la partie avant du boîtier, c'est-à-dire le diamètre du cylindre 32, supérieur à celui du couvercle 34.

Un avantage très important apporté par l'invention réside dans le fait que seul le bord extérieur du plateau 12 du servomoteur a été modifié, toutes les autres pièces restant inchangées, et en particulier le boîtier 16 constitué du cylindre 32 et du couvercle 34. Ceci signifie que, pour un même encombrement total, il est possible, grâce à l'invention, d'améliorer sensiblement les performances du servomoteur en ne modifiant que le plateau 12.

Ainsi, à titre d'exemple, des essais comparatifs sur les servomoteurs des Figures 1 et 2 ont montré, toutes choses étant égales par ailleurs, à savoir un effort d'entrée sur la tige de commande 24 de 100 daN, une dépression de 500 mm Hg dans la chambre avant 18, et une course de la paroi mobile 10 de 10 mm, le servomoteur de la Figure 1 procure sur la tige de sortie un effort de 328 daN, alors que celui de la Figure 2 fournit un effort de sortie de 339 daN, ce qui représente une amélioration de 11 daN, soit environ 3 %, de ses performances, ce qui est très appréciable. Il est ainsi possible grâce à l'invention d'accroître de 3 à 5 % les performances d'un servomoteur en ne modifiant que le plateau de la paroi mobile.

Bien entendu, l'invention n'est pas limitée au mode de réalisation qui vient d'être décrit, mais est susceptible de recevoir de nombreuses modifications qui apparaîtront à l'homme du métier. C'est ainsi par exemple que le prolongement 40 peut être constitué d'une pièce rapportée sur le plateau 12, au lieu d'être d'une seule pièce avec lui comme on l'a décrit. De même, pour éviter d'alourdir le plateau 12, on pourra prévoir que le prolongement 40 soit ajouré.

## Revendications

1. Servomoteur pneumatique du type à dépression comprenant un boîtier (16) formé d'un cylindre (32) et d'un couvercle (34) et divisé en deux chambres (18, 20) par une structure de paroi mobile (10), constituée d'un plateau (12) et d'une membrane souple (14) fixée par un bourrelet (30) formé sur son bord périphérique extérieur au boîtier (16), et formant un pli dans l'espace situé entre le plateau (12) et le boîtier (16), le plateau étant centralement solidarisé à une structure de moyeu abritant un moyen de valve, le plateau (12) comportant à son bord extérieur un prolongement (40) vers l'avant formé avec un épaulement radial (42), caractérisé en ce que la distance radiale (D) entre la partie arrière (44) du prolongement (40) et le couvercle (34) est sensiblement égale à la distance radiale (d) entre la partie avant (46) du prolongement (40) et le cylindre (32) diminuée de l'épaisseur de la membrane (14).

2. Servomoteur pneumatique selon la revendication 1, caractérisé en ce que, dans la position de repos du servomoteur, la partie avant (46) du prolongement (40) est au moins au niveau dans un plan radial, du bourrelet (30).

3. Servomoteur pneumatique selon la revendication 2, caractérisé en ce que la partie avant (46) du prolongement (40) a une forme arrondie se raccordant à l'épaulement (42).

4. Servomoteur pneumatique selon la revendication 3, caractérisé en ce que l'épaulement (42) est incliné sur l'axe du servomoteur.

5. Servomoteur pneumatique selon l'une des revendications précédentes, caractérisé en ce que le prolongement (40) est une pièce rapportée sur le plateau (12).

6. Servomoteur pneumatique selon l'une des revendications 1 à 4, caractérisé en ce que le prolongement (40) est d'une seule pièce avec le plateau (12).

## Claims

1. Pneumatic booster of the vacuum type comprising a casing (16) formed from a cylinder (32) and from a cover (34) and divided into two chambers (18, 20) by a moving wall structure (10), consisting of a plate (12) and of a flexible membrane (14) fixed by a bead (30) formed on its outer peripheral edge to the casing (16), and forming a fold in the space located between the plate (12) and the casing (16), the plate being secured centrally to a hub structure housing a valve means, the plate (12) comprising a forwards extension (40) at its outer edge, formed with a radial shoulder (42), characterized in that the radial distance (D) between the rear part (44) of the extension (40) and the cover (34) is substantially equal to the radial distance (d) between the front part (46) of the extension (40) and the cylinder (32), minus the thickness of the membrane (14).

2. Pneumatic booster according to claim 1, characterized in that, in the rest position of the booster, the front part (46) of the extension (40) is at least level, in a radial plane, with the bead (30).

3. Pneumatic booster according to claim 2, characterized in that the front part (46) of the extension (40) has a rounded shape connecting onto the shoulder (42).

4. Pneumatic booster according to claim 3, characterized in that the shoulder (42) is inclined with respect to the axis of the booster.

5. Pneumatic booster according to one of the preceding claims, characterized in that the extension (40) is a component attached to the plate (12).

6. Pneumatic booster according to one of claims 1 to 4, characterized in that the extension (40) is integral with the plate (12).

## Patentansprüche

1. Pneumatischer Unterdruck-Servomotor mit einem Gehäuse (16), welches durch einen Zylinder (32) und eine Abdeckung (34) gebildet und in zwei Kammern (18, 20) durch eine bewegliche Wandstruktur (10) unterteilt ist, welche durch eine Platte (12) und eine nachgiebige Membran (14) gebildet ist, die mittels eines an ihrem Außenumfangsrand gebildeten Wulstes (30) am Gehäuse (16) befestigt ist und im Raum zwischen der Platte (12) und dem Gehäuse (16) eine Falte bildet, wobei die Platte mittig mit einer Nabenstruktur verbunden ist, welche ein Ventilmittel schützend aufnimmt, wobei die Platte (12) an ihrem Außenrand eine Verlängerung (40) nach vorne enthält, welche mit einer radialen Schulter (42) ausgebildet ist, dadurch gekennzeichnet, daß der radiale Abstand (D) zwischen dem hinteren Abschnitt (44) der Verlängerung (40) und der Abdeckung (34) im wesentlichen gleich dem radialen Abstand (d) zwischen dem vorderen Abschnitt (46) der Verlängerung (40) und dem Zylinder (32), vermindert um die Dicke der Membran (14), ist.

2. Pneumatischer Servomotor nach Anspruch 1, dadurch gekennzeichnet, daß sich in der Ruhestellung des Servomotors der vordere Abschnitt (46) der Verlängerung (40) in einer radialen Ebene wenigstens auf Höhe des Wulstes (40) befindet.

3. Pneumatischer Servomotor nach Anspruch 2, dadurch gekennzeichnet, daß der vordere Abschnitt (46) der Verlängerung (40) eine sich an die Schulter (42) anschließende, abgerundete Form aufweist.

4. Pneumatischer Servomotor nach Anspruch 3, dadurch gekennzeichnet, daß die Schulter (42) zur Achse des Servomotors geneigt ist.

5. Pneumatischer Servomotor nach einem der vorhergehenden Ansprüche, dadurch gekennzeichnet, daß die Verlängerung (40) ein an die Platte (12) angesetztes Teil ist.

6. Pneumatischer Servomotor nach einem der Ansprüche 1 bis 4, dadurch gekennzeichnet, daß die Verlängerung (40) einstückig mit der Platte (12) ausgebildet ist.
